# EUROPÄISCHE PATENTSCHRIFT

(11) **EP 1 593 558 B1**
(45) Veröffentlichungstag und Bekanntmachung des Hinweises auf die Patenterteilung: **07.12.2011**
(21) Anmeldenummer: 05009453.1
(22) Anmeldetag: 29.04.2005
(51) Int. Cl.: B60R 21/26, B23K 11/14, B23K 11/26, B23K 33/00, B23K 11/16, B23K 101/14

(54) **Schweißen von Leitungssystemen**
Welding of conduit systems
Soudage de systèmes de conduites

(30) Priorität: 03.05.2004 DE 102004022017; 29.11.2004 DE 102004057615
(43) Veröffentlichungstag der Anmeldung: 09.11.2005
(73) Patentinhaber: Pampus Automotive GmbH & Co. KG, 58540 Meinerzhagen (DE)
(72) Erfinder: Huperz, Ulrich, 57439 Attendorn (DE); Arcidiacone, Franco, 59846 Sundern (DE)
(74) Vertreter: Wenzel & Kalkoff

(56) Entgegenhaltungen:
- EP-A1- 0 677 354
- DE-A1- 4 240 906
- DE-A1- 4 333 283
- DE-A1- 4 410 178

## Beschreibung

Die Erfindung betrifft ein Verfahren zur Herstellung eines Leitungssystems zum Transport von fluiden Medien, wie z. B. Gasen und Flüssigkeiten nach dem Oberbegriffs des Anspruchs 1. Ein solches Verfahren ist aus der EP 0 677 354 bekannt.

Zu den Leitungssystemen der eingangs genannten Art zählen im Sinne dieser Erfindung alle Anordnungen einschließlich Leitungen, Speichern, Verzweigungen oder Verteilern und dergleichen Einrichtungen, die sich für den Transport von fluiden Medien eignen oder hierfür eingesetzt werden. Es kann sich um einzelne Komponenten wie Rohrleitungsabschnitte, Verteiler oder Speicher handeln, die als Bestandteile von Leitungssystemen eingesetzt werden, es kann sich aber auch um einbaufertige Anordnungen der vorgenannten Komponenten handeln, die in einem Arbeitsgang zu einem Leitungssystem verbunden werden. Die Leitungssysteme umfassen bspw. Leitungssysteme oder deren Bestandteile für flüssige Medien, insbesondere Wasserleitungssysteme (Heizungen, Durchlauferhitzer, Getränkeleitungen), aber auch Gasleitsysteme, z. B. solche, die insbesondere in Fahrzeugen eingebaut werden, um in Falle eines Aufpralls des Fahrzeugs die mittlerweile an verschiedenen Stellen im Fahrzeug angeordneten Airbags aufzublasen, die den Aufprall der Fahrzeuginsassen auf Fahrzeugteile mindern oder verhindern sollen. Aber auch Gasleitungen von Gasspeichern oder anderen Gasquellen zu Heizquellen oder Kochstellen kommen hier in Frage.

Den vorgenannten Leitungssystemen für fluide Medien ist gemeinsam, dass sie mediendicht sein müssen, also flüssigkeitsdicht und/oder gasdicht. Dabei werden bei Leitungssystemen, die drucklos betrieben werden oder die mit geringem Druck beaufschlagt werden, geringere Anforderungen an die Leitungssysteme gestellt. Leitungssysteme, die unter hohem Druck betrieben werden, müssen jedoch besonderen Anforderungen gerecht werden. Dies sei am Beispiel eines Airbag-Systems erläutert: Beim Aufprall wird das in einer den jeweiligen Airbags zugeordneten Gaspatrone gespeicherte Gas schlagartig freigesetzt und durch die entsprechenden Gasleitsysteme dem Airbag zugeleitet. Hier ist die Dichtigkeit des Systems nicht nur erforderlich, um das Funktionieren des Airbag-Systems zu gewährleisten. Ein Reißen des Leitungssystems als Folge mangelnder Dichtigkeit stellt zudem ein hohes Verletzungsrisiko für die Fahrzeuginsassen dar.

Neben den seit bereits geraumer Zeit eingesetzten Fahrer- und Beifahrer-Airbags, für die aufgrund der Integrationsmöglichkeiten in das Lenkrad bzw. in das Armaturenbrett ein relativ großer Bauraum zur Verfügung steht, werden in zunehmender Weise Airbags, nämlich Window- Airbags, Side-Airbags, Kopf-Airbags etc. an solchen Stellen im Fahrzeug eingesetzt, an denen nur ein geringer Bauraum zur Integration der Airbags zur Verfügung steht.

Der Einbau derartiger Airbags setzt deshalb in besonderer Weise die Verwendung von speziell geformten Leitungssystemen voraus. Diese lassen sich jedoch u.a. aufgrund der Mindestbiegeradien der für die Leitungssysteme verwendeten metallenen Rohrleitungen sowie aufgrund der zum Teil sehr komplexen Form nur mit einem sehr hohen technischen und finanziellen Aufwand fertigen, wobei die Leitungssysteme zum Teil aus zwei oder mehreren miteinander verbundenen Rohrleitungen hergestellt werden müssen, damit diese die gewünschte Form aufweisen.

Ein gleiches Problem ergibt sich, wenn beispielsweise in Leitungssystemen für Flüssigkeiten Verteiler anzuordnen sind. Diese Verteiler müssen relativ ausladend konstruiert werden, da bisherige Herstellverfahren der Konstruktion enge Grenzen setzen, unter anderem dadurch, dass Mindest-Biegeradien einzuhalten sind.

Aus der DE 42 40 906 Metzeler Gimetall AG ist ein Verfahren bekannt, bei dem Rohrverzweigungen mittels Laserschweißung aus kaltverformten Blechteilen hergestellt werden. Nachteilig an diesem Verfahren ist, dass das Laserschweißen sehr aufwändig ist, und dass es sich um ein apparativ aufwändiges Verfahren mit sehr geringen Arbeitsgeschwindigkeiten handelt. Es ist zur wirtschaftlichen Herstellung von Serienprodukten nicht geeignet. Zudem können nur solche Schweißnähte gesetzt werden, die dem Laser zugänglich sind. Damit sind komplexe Leitungssysteme mit diesem Verfahren nicht herstellbar.

Der Erfindung liegt die Aufgabe zugrunde, ein Verfahren bereitzustellen, das die kostengünstige Herstellung von Leitungssystemen für fluide Medien ermöglicht.

Die Erfindung löst die Aufgabe durch ein Verfahren gemäß Anspruch 1. Vorteilhafte Weiterbildungen der Erfindung sind in den abhängigen Ansprüchen beschrieben.

Insbesondere das Kondensatorentladungsschweißen, bei dem mit einem Hochstromimpuls, der über eine transformierte Kondensatorentladung erzeugt wird, das Material im Kontaktbereich aufgeschmolzen wird, gewährleistet eine über die gesamte Erstreckung der Längsränder gleichmäßige und stabile Verbindung der Halbschalen. Dabei können auch mehrere Komponenten in einem einzigen Arbeitsgang zu dem Leitungssystem verbunden werden.

Kondensatorentladungsschweißen ist an sich bekannt. Es wird zum Herstellen punktueller, im Einzelfall auch linienförmiger Verbindungen eingesetzt. Widerstandsschweißverfahren, vor allem auch das Kondensatorentladungsschweißen, wurden aber bisher nicht als geeignete Verfahren zum Herstellen gas- und/oder flüssigkeitsdichter Schweissverbindungen beurteilt. Überraschenderweise hat sich jedoch herausgestellt, dass Halbschalen aus Metall, die entlang ihrer Längsränder durch Widerstandsschweißen verbunden wurden, gas- und/oder flüssigkeitsdicht sind. Insbesondere mittels Kondensatorentladungsschweißen gefügte Halbschalen werden zu außerordentlich druckbeständigen Leitungssystemen verbunden. Im Rahmen zerstörender Werkstück-Prüfungen hat sich herausgestellt, dass Gas-Leitungssysteme, die nach dem erfindungsgemäßen Verfahren hergestellt wurden, einem Druck von bis zu 400 bar standgehalten haben, bevor das Leitungssystem zerstört wurde.

Nach einer vorteilhaften Ausführung formen die verbundenen Halbschalen ein gas- und flüssigkeitsdichtes Leitungssystem. Im Falle der Verwendung als Gasleitsystem für Airbags leitet diese im Betriebszustand das gespeicherte Gas zu dem jeweiligen Airbag.

Die Verwendung von Halbschalen, die bereits eine dem Leitungssystem, bspw. dem Heizungsleitsystem oder Gasleitsystem, entsprechende Kontur und den vorgegebenen Verlauf aufweisen, und die zudem bereits eventuell gewünschte Halterungen, Laschen, Ösen oder dergleichen aufweisen können, ermöglicht es, z.B. vollständig auf ein Biegen von Rohrleitungen des fertigen Leitungssystems zu verzichten. Somit können auch Leitungssysteme mit abgewinkelten Rohrleitungen gefertigt werden, deren Biegeradien kleiner sind als die durch den Rohrdurchmesser, mit Blick auf die Verarbeitung in Rohrbiegemaschinen, festgesetzten Mindestradien, die in der Regel dem 2 ½-fachen des Rohrdurchmessers entsprechen. Gleiches gilt für andere Bestandteile von Leitungssystemen, beispielsweise Verteiler oder Speicher, bei denen nach dieser bevorzugten Ausführungsform Halbschalen mit der jeweils gewünschten oder vorgeschriebenen Kontur miteinander verbunden werden.

Insbesondere gegenüber der herkömmlichen Herstellung von Leitungssystemen, z.B. die aus mehreren einzelnen Rohrleitungsabschnitten gebildet werden, welche aufwändig gebogen, geschnitten, gebohrt und durch Schweißen, Verklemmen oder Verpressen miteinander verbunden werden müssen, zeichnet sich das erfindungsgemäße Verfahren dadurch aus, daß beim Vorliegen der entsprechend ausgebildeten Halbschalen ein einziger Herstellungsschritt ausreicht, um das Leitungssystem zu fertigen, womit gegenüber herkömmlichen Verfahren eine erhebliche Zeit- und Kostenreduzierung erzielt werden kann.

Das erfindungsgemäße Verfahren zeichnet sich ferner dadurch aus, daß es sich besonders gut automatisieren lässt, wodurch die Pass- und Wiederholgenauigkeit in ergänzender Weise gesteigert werden kann. Zudem ermöglicht das Widerstandsschweißen eine besonders hohe Fertigungsgeschwindigkeit. So ist es beispielsweise unter Einsatz des Kondensatorentladungsschweiß-Verfahrens möglich, mittels einer Anlage ca. 1.000 Werkstücke pro Stunde herzustellen, also ca. 1.000 Schweißvorgänge innerhalb einer Stunde abzuwickeln.

Die kurze Fertigungsdauer eröffnet einen weiteren Vorteil. Bedingt durch die extrem kurze Schweißzeit, die in der Regel nur wenige Millisekunden beträgt, wird die Energie nur auf die Schweißzone konzentriert, so daß nur ein sehr geringer Wärmeeintrag in das Material stattfindet. Die verschweißten Werkstücke können praktisch kalt aus einer Schweißanlage oder dergleichen entnommen werden und bleiben besonders formbeständig. Probleme mit der Passgenauigkeit durch Schweißverzug, wie er insbesondere bei herkömmlich hergestellten Leitungssystemen auftritt, werden somit wirksam vermieden.

Zur ergänzenden Verbesserung der Formstabilität des herzustellenden Leitungssystems wird erfindungsgemäß vorgeschlagen, mindestens eine Halbschale zu verwenden, die entlang ihrer Längsränder mit einem Ringbuckel versehen ist, der beim Verbinden der Halbschalen aufschmilzt. Sofern der Ringbuckel nicht bereits bei der Herstellung der Halbschalen an den Längsrändern ausgebildet wurde, kann dieser in einem dem Verbinden vorangehenden Verfahrensschritt an den Längsrändern angeordnet werden.

Die Verwendung eines Ringbuckels, der zur Verbindung der Halbschalen im wesentlichen vollständig aufschmilzt und das Verbindungsmittel bildet, gewährleistet eine optimale Formstabilität des Leitungssystems. Insbesondere kreisförmige Rohrleitungen lassen sich somit besonders einfach aus zwei im Querschnitt halbkreisförmigen Halbschalen herstellen. Ein andernfalls zu berücksichtigendes Einsinken von Teilbereichen der Halbschalen entlang der Längsränder tritt hierbei nicht auf.

Ein weiterer Vorteil der Verwendung eines Ringbuckels, der grundsätzlich beliebig ausgebildet sein kann, vorzugsweise jedoch eine im Querschnitt halbrunde, ellipsoide oder eckige, insbesondere dreieckige Form aufweist, wodurch eine besonders zuverlässige Verbindung erreicht werden kann, besteht darin, daß dieser auch aus einem Material gebildet sein kann, das sich von dem Material für die Halbschalen unterscheidet. Die freie Materialwahl für das Verbindungsmittel ermöglicht es, die Zuverlässigkeit und Güte der Verbindung in ergänzender Weise zu verbessern.

Falls es bei komplexen Leitungssystemen erforderlich ist, können Ringbuckel auch nur abschnittsweise, z. B. an besonders schwierig zu verbindenden Abschnitten oder an besonders dickwandigen Abschnitten oder Komponenten des Leitungssystems vorgesehen sein, während an anderen Abschnitten des Leitungssystems das Widerstandsschweißen ohne Ringbuckel erfolgt.

Das erfindungsgemäße Verfahren kann sowohl zur Herstellung von Leitungssystemen mit besonders geringen Wandstärken, aber auch zur Herstellung von Leitungssystemen mit besonders großen Wandstärken eingesetzt werden. Die Wandstärken der Leitungssysteme können zwischen 0,5 mm und 5 mm liegen, wobei Wandstärken von 1 mm bis 1,5 mm besonders vielen Anwendungsfällen gerecht werden.
Grundsätzlich erlaubt das erfindungsgemäße Verfahren die Verwendung beliebig hergestellter, bspw. gießtechnisch oder frästechnisch hergestellter Halbschalen. Nach einer vorteilhaften Ausgestaltung der Erfindung werden jedoch Halbschalen verwendet, die durch Tiefziehen hergestellt sind. Sollten die Halbschalen nicht bereits in verwendbarer Form vorliegen, dann kann der Tiefziehprozess mit dem erfindungsgemäßen Verfahren kombiniert werden. Der Ausdruck Halbschalen bezieht sich sowohl auf Rohrabschnitte wie auf andere Bestandteile von Leitungssystemen, wie bereits vorstehend erläutert wurde.

Das Tiefziehen zeichnet sich insbesondere dadurch aus, daß damit auch sehr komplexe Formen besonders einfach hergestellt werden können. Das Tiefziehen erlaubt ferner die Verwendung von Blechen mit besonders niedrigen Dicken. Insbesondere können somit Leitungssysteme mit einer Wandstärke von 0,5 bis 1,5 mm, vorzugsweise 1 mm, hergestellt werden , die sich dadurch auszeichnen, daß sie besonders leicht sind und gleichzeitig die erforderliche Stabilität, insbesondere die erforderlichen Berstdrücke, wie sie bspw. bei Gasleitsystemen für Airbags gefordert werden, erreichen.

Da für die Halbschalen grundsätzlich alle metallischen Werkstoffe verwendet werden können, kann das Leitungssystem optimal an den jeweiligen Einsatzzweck angepasst werden. Nach einer vorteilhaften Weiterbildung der Erfindung sind die das Leitungssystem bildenden Rohrleitungen aus verzinktem Vormaterial hergestellt oder werden in einem dem Verbinden der Halbschalen vorangehenden Verfahrensschritt verzinkt.

Das Verzinken ist eine optimale Methode zum Schutz von Stahl. Hierbei wird das Produkt vorzugsweise nach einer speziellen Vorbehandlung entweder feuerverzinkt oder galvanisch verzinkt. Der so aufgebrachte Zinküberzug ist festhaftend, abrieb- und schlagfest. Durch seine hohe Beständigkeit gegen atmosphärische Beanspruchung schützt das Verzinken somit langfristig vor Korrosion.

Der so hergestellte Korrosionsschutz, der auch durch den Verbindungsvorgang nicht zerstört wird, ermöglicht es, auf die nachträgliche Aufbringung eines gegebenenfalls geforderten Korrosionsschutzes zu verzichten, so daß die Herstellungskosten für das Leitungssystem in ergänzender Weise reduziert werden können.

Das Leitungssystem oder dessen Komponente weist eine das Leitungssystem bildende Komponente auf, die aus zwei entlang ihrer Längsränder miteinander mittels Widerstandsschweißen, insbesondere Kondensatorentladungsschweißen verbundenen Halbschalen gebildet ist. Ein wesentlicher Vorteil dieser Leitungssysteme, zu denen bspw. Leitungen für Heizungen und Gasleitsysteme für Airbags zählen, besteht in den besonders geringen Herstellungskosten, die aus der Verwendung zweier Halbschalen resultiert, die jeweils bereits die dem Leitungssystem entsprechende Form aufweisen, so dass jede weitere Nachbearbeitung des Leitungssystems entfällt.

Insbesondere die Herstellung komplexer Leitungssysteme, deren derzeitige Herstellung durch Biegen und teilweise umständliches Verbinden entsprechender Rohrleitungen erfolgt, kann wesentlich schneller und kostengünstiger erfolgen. Zudem bergen die erfindungsgemäßen Leitungssysteme aufgrund der geradlinigen Kontaktflächen, die problemlos zu verbinden sind, ein wesentlich geringeres Risiko für geschwächte Verbindungsstellen, so daß diese besonders zuverlässig sind. Außerdem können Leitungssysteme hergestellt werden, die besonders kompakt sind, da die Beschränkungen üblicher Biegeverfahren nicht mehr zu beachten sind. Schließlich können Leitungssysteme angeboten werden, bei denen komplexe Anordnungen aus Leitungsabschnitten, Verteilern, Speicherelementen und dergleichen durchgängig verbunden sind.

Die erfindungsgemäß durch Widerstandsschweißen, insbesondere Kondensatorentladungsschweißen, miteinander verbundenen Halbschalen des Leitungssystems zeichnen sich durch ihren gleichmäßigen Verbindungsbereich aus, der eine besonders hohe Zuverlässigkeit des Leitungssystems gewährleistet. Die insbesondere beim Kondensatorentladungsschweißen entstehende geringe Wärmeeinflusszone verhindert dabei zuverlässig Gefügeänderungen im Material des Leitungssystems, die u.U. im Falle der Verwendung als Gasleitsystem für Airbags, zu einem Versagen des Systems im Betrieb führen könnten.

Die zur Herstellung des Leitungssystems oder dessen Komponenten verwendeten Halbschalen können grundsätzlich beliebig hergestellt sein. Nach einer besonders vorteilhaften Ausführungsform der Erfindung sind die Halbschalen jedoch durch Tiefziehen hergestellt. Derartige Halbschalen zeichnen sich insbesondere durch ihre geringen Herstellungskosten aus, die es in ergänzender Weise ermöglichen, die Herstellungskosten des Leitungssystems zu senken. Zudem weisen die tiefgezogenen Halbschalen über ihre gesamte Erstreckung eine gleichmäßige Wandstärke auf.

Nach einer weiteren Ausgestaltung der Erfindung werden verzinkte Halbschalen zur Herstellung der das Leitungssystem bildenden Komponenten verwendet. Dadurch kann auf einen separat aufzutragenden Korrosionsschutz verzichtet werden, wodurch die Herstellungskosten derartiger Leitungssysteme weiter reduziert werden können.

Die Halbschalen werden nach einer Weiterbildung der Erfindung aus einem Blech mit einer Dicke von 0,5 bis 5 mm, vorzugsweise 1mm bis 1,5 mm hergestellt. Die unter Verwendung dieser Bleche hergestellten Leitungssysteme, insbesondere Gasleitsysteme, aber auch Flüssigkeitsleitsysteme zeichnen sich durch ihr geringes Gewicht aus, wobei gleichzeitig die an das Leitungssystem, insbesondere Gasleitsystem gestellten Stabilitätseigenschaften erfüllt werden.

Nachstehend wird ein Ausführungsbeispiel der Erfindung anhand der Zeichnungen beschrieben. In den Zeichnungen zeigen:
- Fig. 1: eine perspektivische Darstellung zweier zu einem Gasleitsystem eines Airbags zu verbindender Halbschalen;
- Fig. 2: eine Draufsicht auf eine Halbschale von Fig. 1;
- Fig. 3: eine Seitenansicht auf die Halbschalen von Fig. 1;
- Fig. 4: eine Vorderansicht der Halbschalen von Fig. 1 und
- Fig. 5: eine Vergrößerung der Ausschnitte Y und Z von Fig. 4.

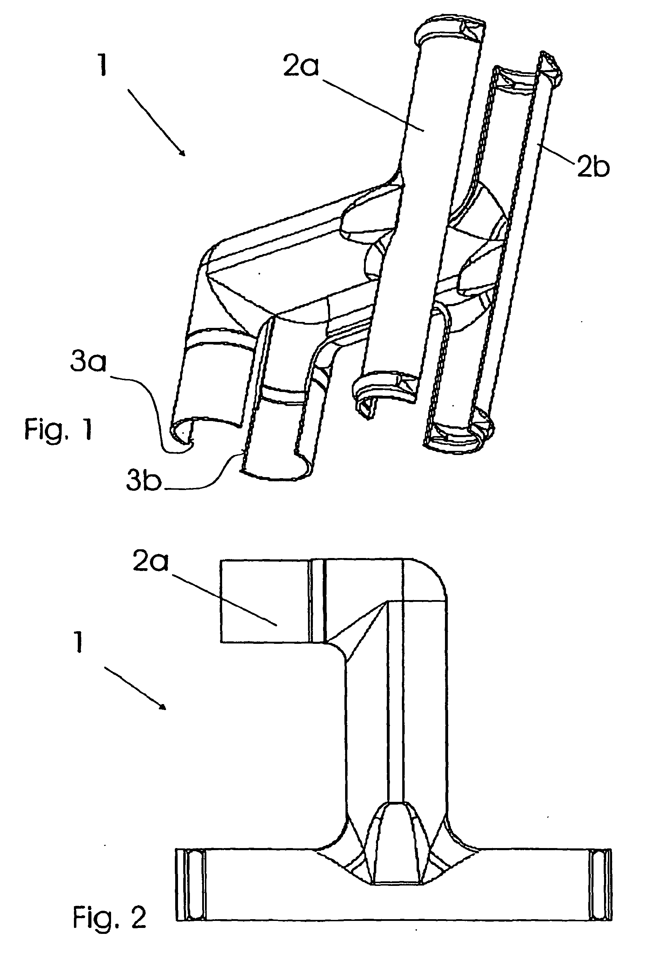

Fig. 1 zeigt eine perspektivische Ansicht zweier korrespondierend ausgebildeter Halbschalen, 2a, 2b die zu Herstellung eines Gasleitsystems 1 entlang ihrer Längsränder 3a, 3b miteinander verbunden werden. Sämtliche Biegungen und Abzweigungen des herzustellenden Gasleitsystems 1 sind bereits in den tiefgezogenen Halbschalen 2a, 2b ausgebildet, so daß im Anschluss an den Verbindungsvorgang der Halbschalen 2a, 2b keine weiteren Herstellungsschritte erforderlich sind (vgl. Fig. 2 - 4).

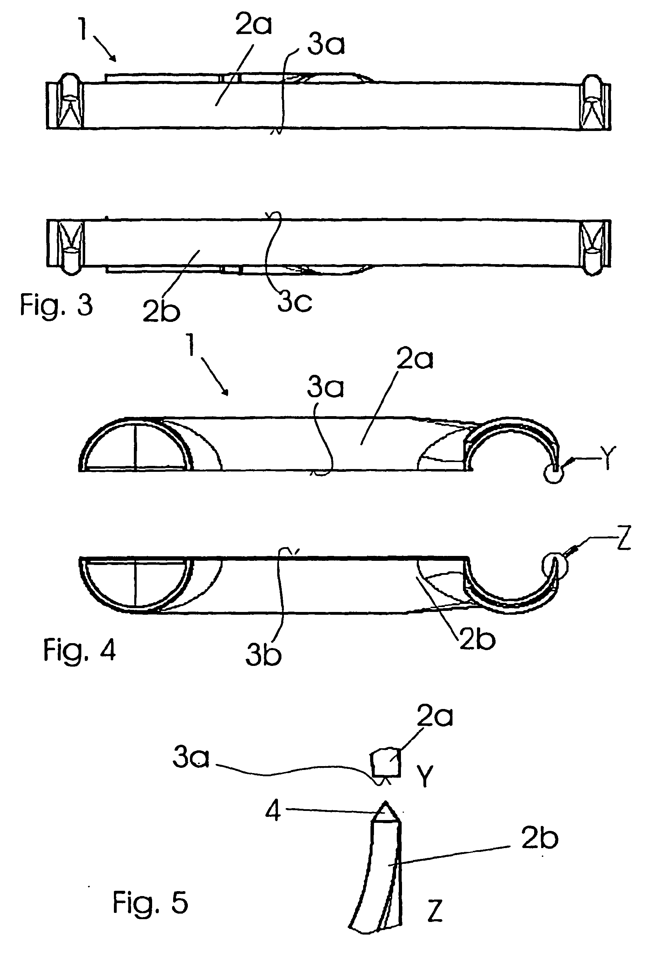

Auf dem umlaufenden Längsrand 3b der Halbschale 2b ist ein im Querschnitt dreieckiger Ringbuckel 4 angeordnet, der beim Verbinden durch Kondensatorentladungsschweißen aufschmilzt und die beiden Halbschalen 2a, 2b stoffschlüssig miteinander verbindet (vgl. Fig. 5).

Eine Ausführungsform eines Verfahrens zur Herstellung des Gasleitsystems 1 umfasst folgende Herstellungsschritte:

Zuerst werden die Halbschalen 2a, 2b aus Blechen mit einer Dicke von 1 mm im Tiefziehverfahren entsprechend der zu erreichenden Form des Gasleitsystems 1 hergestellt. In einem sich daran anschließenden Herstellungsschritt werden die Halbschalen 2a, 2b in einem elektrischen Bad mit einer Zinkschicht überzogen. Nachfolgend wird die Halbschale 2b entlang ihrer Längsränder 3b mit einem im Querschnitt dreieckigen Ringbuckel 4 versehen.

Die so hergestellten Halbschalen 2a, 2b werden in einer hier nicht dargestellten Schweißanlage so positioniert, daß sie entlang ihrer Längsränder 3a, 3b aneinander liegen. Durch Kondensatorentladungsschweißen schmilzt der Ringbuckel 4 auf und die Halbschalen 2a, 2b werden stoffschlüssig miteinander verbunden und bilden das Gasleitsystem 1.

## Patentansprüche

1. Verfahren zur Herstellung eines Leitungssystems zum Transport von fluiden Medien, wie Gasen und Flüssigkeiten oder von Komponenten hierfür, wobei das Leitungssystem mindestens eine Komponente aus Metall aufweist und die Komponente aus zwei Halbschalen (2a, 2b) gebildet wird, die entlang ihrer Längsränder (3a, ₃b) durch Widerstandsschweißen, insbesondere Kondensatorentladungsschweißen miteinander verbunden werden, **dadurch gekennzeichnet, daß** mindestens eine Halbschale (2a, 2b) entlang ihrer Längsränder (3a, 3b) mindestens abschnittsweise mit einem Ringbuckel (4) versehen ist, der beim Verbinden der Halbschalen (2a, 2b) aufschmilzt.

2. Verfahren nach Anspruch 1, **dadurch gekennzeichnet, daß** der Ringbuckel (4) eine im Querschnitt halbrunde, ellipsoide oder eckige, insbesondere dreieckige Form aufweist.

3. Verfahren nach einem der vorhergehenden Ansprüche, **dadurch gekennzeichnet, daß** durch Tiefziehen hergestellte Halbschalen (2a, 2b) für die Herstellung eines Leitungssystems zum Transport von fluiden Medien verwendet werden.

4. Verfahren nach einem der vorhergehenden Ansprüche, **dadurch gekennzeichnet, daß** die Halbschalen (2a, 2b) vor dem Verbinden verzinkt werden.

## Claims

1. A method for the production of a conduit system for the transport of fluid media, such as gases and liquids or of components for this, wherein the conduit system has at least one component made of metal and the component is formed from two half shells (2a, 2b), which are connected with each other along their longitudinal edges (3a, 3b) through resistance welding, in particular capacitor discharge welding, **characterized in that** at least one half shell (2a, 2b) is provided along its longitudinal edges (3a, 3b) at least in sections with an annular projection (4), which fuses during connection of the half shells (2a, 2b).

2. The method according to claim 1, **characterized in that** the annular projection (4) has a semicircular, ellipsoidal or angular in particular triangular, shape in cross-section.

3. The method according to one of the previous claims, **characterized in that** half shells (2a, 2b) produced through deep-drawing are used for the production of a conduit system for the transport of fluid media.

4. The method according to one of the previous claims, **characterized in that** the half shells (2a, 2b) are galvanized before connection.

## Revendications

1. Procédé de fabrication d'un système de conduites pour le transport de milieux fluidiques, tels que des gaz et des liquides, ou de composants adaptés, le système de conduites comprenant au moins un composant en métal et le composant étant formé de deux demi-coques (2a, 2b) qui sont reliées entre elles le long de leurs bords longitudinaux (3a, 3b) par soudage par résistance, en particulier par soudage par décharge à condensateur, **caractérisé en ce qu'**au moins une demi-coque (2a, 2b) est munie le long de ses bords longitudinaux (3a, 3b) au moins partiellement d'un bossage annulaire (4) qui fond lors de la liaison des demi-coques (2a, 2b).

2. Procédé selon la revendication 1, **caractérisé en ce que** le bossage annulaire (4) présente une forme semi-circulaire, ellipsoïdale ou angulaire, en particulier triangulaire dans la section transversale.

3. Procédé selon une des revendications précédentes, **caractérisé en ce que** des demi-coques (2a, 2b) fabriquées par emboutissage sont utilisées pour la fabrication d'un système de conduites pour le transport de milieux fluidiques.

4. Procédé selon une des revendications précédentes, **caractérisé en ce que** les demi-coques (2a, 2b) sont galvanisées avant la liaison.
